Europäisches Patentamt

European Patent Office

Office européen des brevets

(11) Veröffentlichungsnummer: **0 253 145 B1**

# EUROPÄISCHE PATENTSCHRIFT

(45) Veröffentlichungstag der Patentschrift: **31.07.91**

(51) Int. Cl.5: **H01T 19/00, B29C 59/12**

(21) Anmeldenummer: **87108664.1**

(22) Anmeldetag: **16.06.87**

(54) **Vorrichtung zur Behandlung von Materialoberflächen mittels einer elektrischen Koronaentladung.**

(30) Priorität: **05.07.86 DE 3622737**

(43) Veröffentlichungstag der Anmeldung:
**20.01.88 Patentblatt 88/03**

(45) Bekanntmachung des Hinweises auf die
Patenterteilung:
**31.07.91 Patentblatt 91/31**

(84) Benannte Vertragsstaaten:
**DE ES FR GB IT SE**

(56) Entgegenhaltungen:
**DE-A- 2 806 551**
**DE-A- 3 314 255**
**GB-A- 2 086 144**
**US-A- 3 484 363**

(73) Patentinhaber: **Kalwar, Klaus**
**Alte Landwehr 10**
**W-4803 Steinhagen(DE)**

(72) Erfinder: **Kalwar, Klaus**
**Alte Landwehr 10**
**W-4803 Steinhagen(DE)**
Erfinder: **Berger, Horst**
**Hunteweg 6**
**W-4800 Bielefeld 11(DE)**
Erfinder: **Berger, Otto**
**Humpenweg 11**
**W-4802 Halle(DE)**
Erfinder: **Gumpert, Fritz**
**Azaleenstrasse 2**
**W-4803 Steinhagen(DE)**

(74) Vertreter: **Stracke, Alexander, Dipl.-Ing. et al**
**Jöllenbecker Strasse 164**
**W-4800 Bielefeld 1(DE)**

## Beschreibung

Die vorliegende Erfindung betrifft eine Vorrichtung zur Behandlung von Materialoberflächen mittels einer elektrischen Koronaentladung gemäß dem Oberbegriff des Anspruchs 1.

Es ist bekannt, daß die Adhäsion an Materialoberflächen durch die Beaufschlagung mit einer elektrischen Koronaentladung verbessert werden kann bzw. daß durch die Koronaentladung bei unpolarem Material eine entsprechend adhäsive Oberfläche geschaffen wird.

Die Koronaentladung erzeugt durch das während der Entladung entstehende Ozon an der behandelten Materialoberfläche oxydative Haftzentren, deren Intensität und Zahl in einer Wechselbeziehung zum aufgewandten Energieniveau und der Entladungsfrequenz steht.

Das während der Koronaentladung entstehende Ozon ist äußerst aggressiv, so daß das Bedienungspersonal von Vorrichtungen zur Koronabehandlung vor diesem Ozon zuverlässig geschützt werden muß. Dazu sind bei einer bekannten gattungsgemäßen Vorrichtung Absaugöffnungen vorgesehen, denen das bei der Koronaentladung entstehende Gas abgesaugt wird.

Es hat sich nun gezeigt, daß diese Ozonabsaugung eine Verringerung des Wirkungsgrades bei der Koronabehandlung mit sich bringt, wobei besonders große Produktionsanlagen mit entsprechendem Leistungsausstoß und entsprechend angepaßten, großen Koronabehandlungsanlagen negativ betroffen sind.

Die bislang durchgeführte Ozonabsaugung bringt den weiteren Nachteil mit sich, daß das elektrisch relativ leitfähige Ozon als unerwünschtes Ionisationsmedium für die Koronazündung nur teilweise verfügbar ist.

Das gleiche gilt für die ebenfalls bei einer Koronabehandlung entstehenden ebenfalls relativ elektrisch leitfähigen Stickstoffgase, die nach der Absaugugng praktisch als Abfallprodukt dem Produktionsprozeß nicht mehr zur Verfügung stehen.

Bei einer aus US-A 3 484 363 bekannten Vorrichtung zur Koronabehandlung ist ein Gebläse vorgesehen, das Arbeitsgas absaugt und in der Nähe des Wirkspalts zurückführt. Durch diese Vorrichtung wird aber nur ein unbefriedigendes, den geforderten Qualitätsansprüchen nicht gerecht werdendes Behandlungsergebnis erzielt.

Eine besonders ungünstige Anwendungssituation ist im Bereich der Verarbeitung lösungsmittelhaltiger Substrate zu sehen. In diesem Bereich muß wegen der herrschenden Explosionsgefahr ein erheblicher apparate- und steuerungstechnischer Aufwand betrieben werden, um auf der einen Seite keine zündfähigen Lösungsmittel/Luftgemische durch die Absaugung an die Koronaelektroden anzusaugen und um auf der anderen Seite kein gesundheitsschädigendes Ozongas an den Arbeitsplatz austreten zu lassen.

Der vorliegenden Erfindung liegt die Aufgabe zugrunde, eine Vorrichtung der gattungsgemäßen Art so zugestalten, daß ein erheblich verbesserter Wirkungsgrad der Koronabehandlung möglich wird.

Diese Aufgabe wird erfindungsgemäß durch die im kennzeichnenden Teil des Anspruchs 1 genannten Merkmale gelöst.

Durch diese konstruktive Ausgestaltung wird der Wirkungsgrad der Koronabehandlung beträchtlich erhöht, wobei Untersuchungen des Wirkmechanismus der Koronaentladung in Bezug auf die Adhäsionswerte überraschenderweise gezeigt haben, daß neben den für die Adhäsion wirksamen elektrostatischen Kräften der Oxydation und somit der Menge des Ozons eine erhebliche Bedeutung zukommt.

Auch die Rückführung der übrigen bei der Koronabehandlung entstehenden elektrisch leitfähigen Gase in den unmittelbaren Wirkbereich der Koronaelektroden beeinflußt in äußerst günstigem Maße den Wirkungsgrad der Koronabehandlung.

Insbesondere die unerwünschten, bislang auftretenden Rückseitenbehandlungseffekte bei der Behandlung von bahnförmigen Materialien, werden durch die Erfindung vermieden, da die Energiezufuhr, besonders auch durch die Erwärmung des zurückführbaren Gases erheblich verringert werden kann. Diese verringerte Energiezufuhr hat letztendlich die Vermeidung der Rückseitenbehandlungseffekte zur Folge.

Im übrigen führt die Anordnungen der Öffnungen zur Zurückführung des Gases in der Koronahochleistungselektrode zu einer sehr gleichmäßigen Verteilung des zurückgeführten Gases und somit zu einer Oberflächenbehandlung, die den Qualitätsansprüchen gerecht wird.

Eine weitere Verbesserung des Wirkungsgrades wird dadurch erreicht, daß der Energiebedarf insgesamt gesenkt wird, da die aufgewandte Energie zur elektrischen Koronaentladung gewissermaßen in einem "Energierecycling" dem System wieder zugeführt wird und auch deshalb niedriger ist, weil die Zündspannung an der Korona-Hochleistungselektrode infolge der durch die zurückgeführten Gase verbesserten Ionisationsbedingungen im sogenannten Elektrodenspalt niedriger gehalten werden kann. Ganz allgemein erlaubt die erfindungsgemäße Vorrichtung eine erheblich einfachere und sicherere Behandlungsanlagenausführung zur Anwendung in explosionsgefährdeten Verarbeitungsprozessen.

Die erwähnten Rückseitenbehandlungseffekte, bei denen in unerwünschter Weise die Rückseite der Folienbahn ebenfalls koronabehandelt wurde, stellten bislang ein Problem dar, das teilweise zu großen Ausschußquoten führte.

Weitere Merkmale der Erfindung sind Gegenstand von Unteransprüchen.

Ausführungsbeispiele der Erfindung bzw. Einzelteile solcher Vorrichtungen, werden im folgenden anhand der beifügten Zeichnungen beschrieben.

Im einzelnen zeigen:

Fig. 1

eine schematische Darstellung einer Vorrichtung zur Koronabehandlung von bahnförmigen Materialien,

Fig. 2

ein weiteres Ausführungsbeispiel einer Vorrichtung zur Koronabehandlung von bahnförmigen Materialien,

Fig. 3

eine Einzelheit eines Gehäuses, in dem eine Korona-Hochleistungselektrode festlegbar ist,

Fig. 4

eine Einzelheit der Korona-Hochleistungselektrode,

Fig. 5

eine Unteransicht einer Korona-Hochleistungselektrode nach einem weiteren Ausführungsbeispiel,

Fig. 6

ein weiteres Ausführungsbeispiel einer Korona-Hochleistungselektrode,

Fig. 7

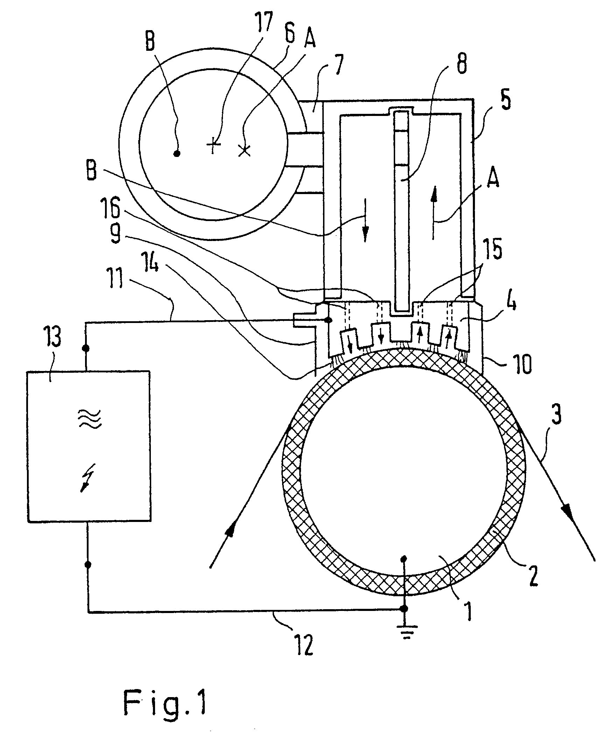

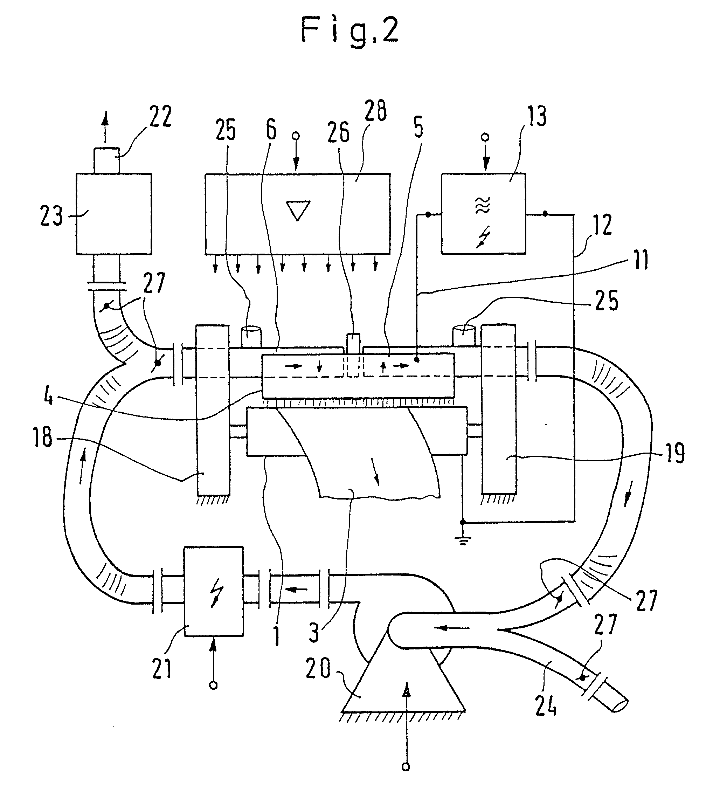

eine Ansicht eines Tragrohres der Vorrichtung nach den Figuren 1 oder 2,

Fig. 8

eine Draufsicht auf ein Gehäuse zur Aufnahme einer Korona-Hochleistungselektrode,

Fig. 9

eine schematische Darstellung einer Vorrichtung zur Koronabehandlung bei explosionsgefährdeten Verarbeitungsprozessen,

Fig. 10

eine Ansicht eines Tragrohres nach einem weiteren Ausführungsbeispiel,

Fig. 11

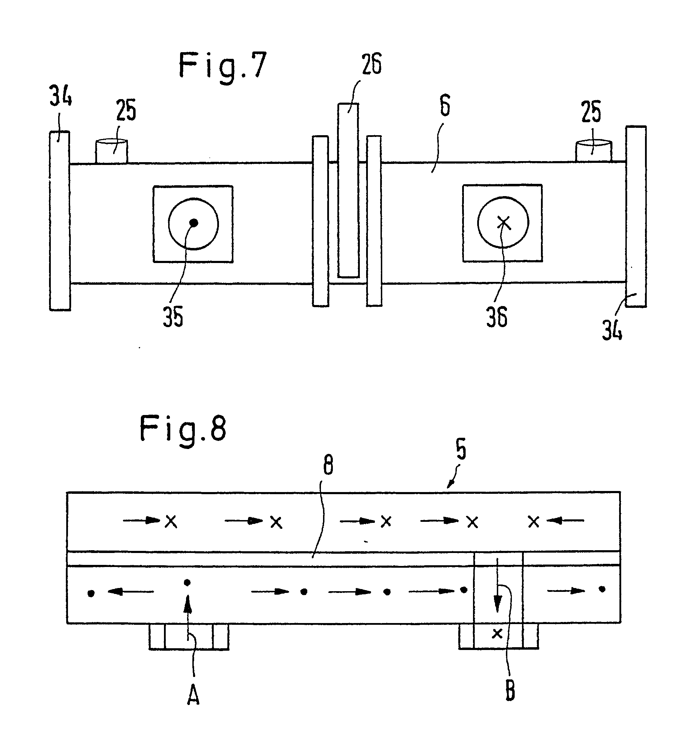

eine der Figur 8 entsprechenden Draufsicht auf ein Gehäuse nach einem weiteren Ausführungsbeispiel der Erfindung,

Fig. 12

eine schematische Darstellung einer weiteren Ausgestaltung der erfindungsgemäßen Vorrichtung,

Fig. 13

einen Querschnitt durch einen Teilbereich der Vorrichtung schematisch dargestellt,

Fig. 14 und 15

jeweils eine schematische Darstellung des Wirkungsbereiches der Korona-Hochleistungselektrode nach der Erfindung,

Fig. 16 bis 19

unterschiedliche Korona-Hochleistungselektroden jeweils im Querschnitt dargestellt,

Fig. 20

einen Teilquerschnitt durch die erfindungsgemäße Vorrichtung im Bereich einer Korona-Hochleistungselektrode,

Fig. 21

eine teilweise Vorderansicht des Wirkungsbereiches der Korona-Hochleistungselektrode,

Fig. 22

ein weiteres Ausführungsbeispiel einer erfindungsgemäßen Vorrichtung in einer schematischen Darstellung.

Bei der in der Figur 1 gezeigten Vorrichtung zur Koronabehandlung von bahnförmigen Materialien ist eine Trägerelektrode 1 in Form einer mit einem Dielektrikum 2 beschichteten Walze vorgesehen, über die das bahnförmige Material geführt wird.

Der Trägerelektrode 1 gegenüberliegend ist eine Korona-Hochleistungselektrode in Form eines Elektrodenprofils 4 vorgesehen, das an einem Gehäuse 5 angeordnet ist. Das Gehäuse 5 seinerseits ist an einem Tragrohr 6 befestigt und zwar über Anschlußflansche 7.

Das Gehäuse 5 ist durch eine eingeschobene Trennwand 8 in zwei Kammern unterteilt. Es sei ausdrücklich darauf hingewiesen, daß auch mehrere Trennwände 8 vorgesehen werden können, um innerhalb des Gehäuses 5 mehrere Kammern zu bilden.

An dem der Trägerlektrode 1 zugewandten Ende des Gehäuses 5, an dem auch das Elektrodenprofil 4 angeordnet ist, befinden sich Schutzisolationen 9 und 10, die das Elektrodenprofil 4 seitlich überdecken.

Das Elektrodenprofil 4 ist über eine die Schutzisolation 9 durchtretende Leitung 11 und die Trägerelektrode 1 über eine weitere Leitung 12 mit einem Hochspannungsgenerator 13 verbunden.

Wird der Hochspannungsgenerator 13 in Betrieb genommen, entsteht durch die Hochspannung an dem Elektrodenprofil 4 gegenüber dem Material 3 eine elektrische Koronaentladung 14, mit der die Bildung adhäsiver Haftzentren auf der Oberfläche des Materials 3 möglich ist.

Das Elektrodenprofil 4 ist mit Öffnungen 15 versehen durch die bei der Koronabehandlung entstehende Gase, wie Ozongas, Stickstoffgas od. dgl. durch eine der Kammern innerhalb des Gehäuses 5 in das Tragrohr 6 abgesaugt werden können. Durch die zweite Kammer des Gehäuses 5 und durch weitere Öffnungen 16 innerhalb des Elektrodenprofiles 4 kann ein Teil des abgesaugten Gases wieder in den Arbeitsbereich des Elektrodenprofiles 4 zur Unterstützung der Koronabehandlung zurückgeführt werden.

Durch die Pfeilrichtung A ist die Absaugung der entstehenden Gase charakterisiert. Die Pfeilrichtung B symbolisiert die Rückführung der Gase in den Arbeitsbereich des Elektrodenprofils 4.

Die vorteilhafterweise aus den drei Grundbauteilen Elektrodenprofil 4, Gehäuse 5 und Tragrohr 6 bestehende Einheit ist um die Längsachse 17 des Tragrohres 6 schwenkbar.

In Figur 2 ist eine vollständige Vorrichtung zur Koronabehandlung eines bahnförmigen Materials 3 in dessen Durchlaufrichtung gezeigt.

Das schwenkbare Tragrohr 6 mit dem Gehäuse 5 und dem Elektrodenprofil 4 ist ebenso wie die Trägerelektrode 1 in ortsfesten Seitenteilen 18 und 19 gelagert.

Mittels eines Ventilators 20 können im Wirkungsbereich des Elektrodenprofiles 4 entstehende Gase abgesaugt werden. Der Ventilator 20 fördert diese Gase durch einen Filter 21, vorzugsweise durch einen elektrostatischen Filter. Nach Durchtritt durch den Filter 21 können die gereinigten Gase wieder in das Trägerrohr 6 zurückgeführt oder über ein Austrittsrohr 22 abgeführt werden, wobei zuvor in einem Katalysator 23 eine Wandlung der Gase, beispielsweise des aggressiven, dreiwertigen Ozons zu normalem, zweiwertigen Sauerstoff durchgeführt worden ist.

Wie die Figur 2 deutlich macht, kann über ein zusätzliches Ansaugrohr 24, das vor der Saugseite des Ventilators 20 einmündet, der gesamten Vorrichtung auch Frischluft, Sauerstoff, Edelgas bzw. ein Gemisch von Gasen zugeführt werden.

Die in das Tragrohr 6 einmündenden Anschlußrohre 25 gestatten es, dem Elektrodenprofil 4 auch unabhängig von dem vorstehend beschriebenen Ventilationskreislauf gasförmige Medien zuzuführen.

Der etwa in der Mitte des Tragrohres 6 angeordnete Schieber 26 gestattet wahlweise entweder gleichzeitige Zu- oder Abführung eines gasförmigen Mediums.

Innerhalb des Ventilationskreislaufes sind verschiedene Drosselventile 27 eingebaut, die der Regelung des Gaskreislaufes dienen.

Mittels eines Prozeßrechners 28 oder einer entsprechenden Steuerung können alle für den Bearbeitungsprozeß notwendigen Daten erfaßt und für eine optimale Koronabehandlung geregelt werden.

In der Figur 3 ist das Oberteil des Gehäuses 5 mit einer Führungskerbe 29 zum Einschieben einer Trennwand 8 gezeigt, um die Gasströme innerhalb des Gehäuses 5 einwandfrei voneinander trennen zu können.

Die Figur 4 zeigt noch einmal das Elektrodenprofil 4. Es wird deutlich, daß auch dieses Elektrodenprofil 4 eine Einkerbung 30 zum Einschieben einer Trennwand aufweist.

Das Elektrodenprofil 4 weist eine der walzenförmigen Trägerelektrode 1 angepaßte Krümmung auf.

In Längsrichtung ist das Elektrodenprofil 4 mit mehreren Stegen 31 versehen. In den Stegzwischenräumen sind die schon erwähnten Absaugöffnungen 15 ebenso vorgesehen wie die schon erwähnten weiteren Öffnungen 16 zur Rückführung eines Gases.

Vorteilhafterweise sind sowohl die Absaugöffnungen 15 wie auch die weiteren Öffnungen 16 - in Längsrichtung des Elektrodenprofiles 4 gesehen - gegeneinander versetzt angeordnet. Diese Maßnahme verhindert insbesondere einen streifenförmigen Verlauf des Adhäsionswertes auf dem zu behandelnden Material 3.

Auch die Entladungsstege 31 können mit Bohrungen zur Durchführung von Luft- und/oder Gasströmen versehen sein.

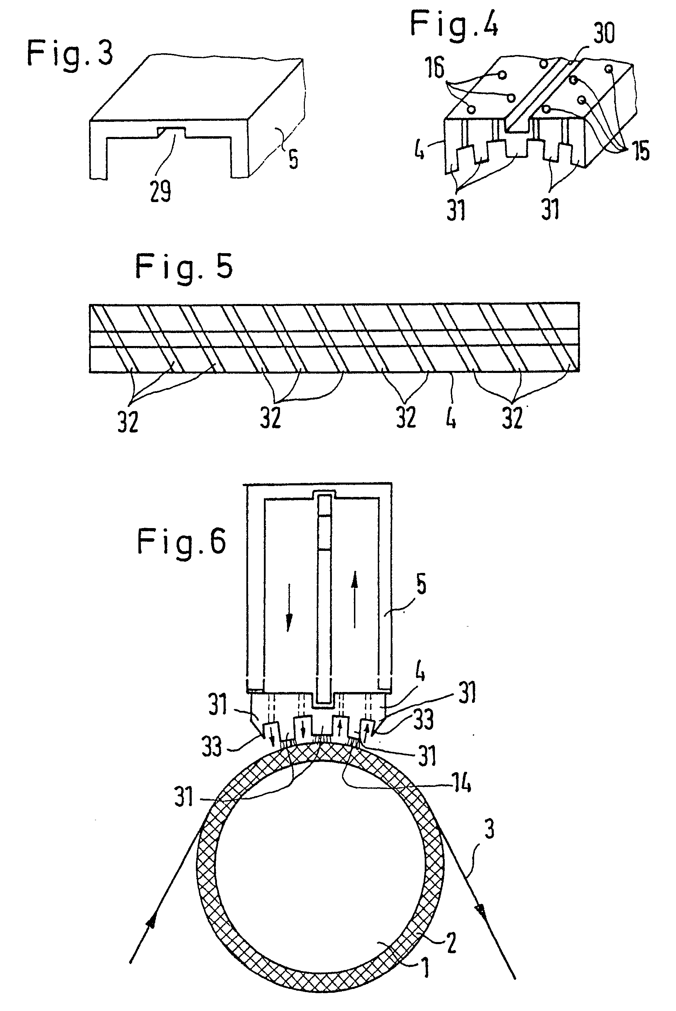

Die Figur 5 zeigt als Ausführungsbeispiel ein Elektrodenprofil 4, bei dem zur Absaugung und Rückführung von Ozongas oder anderen gasförmigen Medien keine Absaugöffnungen oder Bohrungen vorgesehen sind, sondern diagonal zur Längsachse des Elektrodenprofiles 4 verlaufende Ausbrüche 32.

Figur 6 zeigt eine spezielle Ausführung des Elektrodenprofiles 4.

Die jeweils äußeren Stege 31 sind kürzer ausgeführt als die übrigen Stege 31 und weisen eine zur Mittelachse der Trägerelektrode 1 weisende, spitze Kante 33 auf.

Durch diese konstruktive Maßnahme wird erreicht, daß am folgenden und vorhergehenden Steg 31 die Korona 14 scharfkantig zur Trägerelektrode 1 durch elektrische Feldunterdrückung mit Hilfe der spitzen Kanten 33 erfolgt.

Es ist vorteilhaft, daß die Absaugung der Gase im Bereich des Materialauslaufes und die Rückführung des Ozongases oder anderer, gasförmiger Medien, im Bereich des Materialeinlaufes durchgeführt wird. Dies bedeutet, daß im Bereich des Materialauslaufes eine Saugwirkung und im Bereich des Materialeinlaufes eine Druckwirkung erzielt wird.

Die Figur 7 zeigt noch einmal das Tragrohr 6 einer wie vorstehend beschrieben aufgebauten Vorrichtung. Das Tragrohr 6 ist stirnseitig mit Flanschen 34 zum Anschluß an entsprechende Ventilationsleitungen versehen.

Der schon erwähnte Schieber 26 in der Mitte des Tragrohres 6 gestattet eine Kammerbildung auch innerhalb des Tragrohres 6, so daß beispielsweise in dem Bereich einer Kammer ein Gasstrom angesaugt und aus der anderen Kammer ein Gasstrom abgeführt werden kann (Positionen 35 und 36). Ist der Schieber 26 geöffnet, kann über die Positionen 35 und 36 gemeinsam wahlweise ein gasförmiges Medium angesaugt oder abgeführt werden.

Die Figur 8 zeigt eine Draufsicht des Gehäuses 5 mit der Trennwand 8, wobei durch die Pfeile A und B wiederum Druck-und Saugrichtung charakterisiert sind.

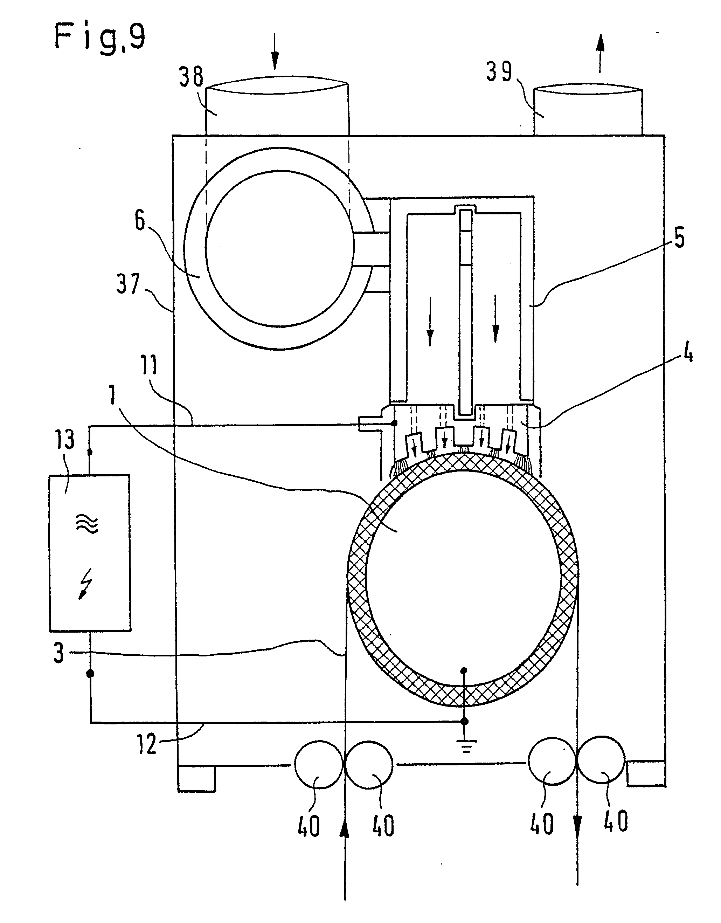

Figur 9 zeigt eine Vorrichtung zur Koronabehandlung von bahnförmigen Materialien 3 bei Produktionsprozessen, bei denen Explosionsgefahr besteht.

Auch hier besteht das Koronaelektrodensystem aus dem Tragrohr 6,aus dem Gehäuse 5 sowie dem Elektrodenprofil 4 und der Trägerelektrode 1.

Diese Bauteile sind vollständig in einem Zusatzgehäuse 37 angeordnet.

Dem Elektrodenprofil wird Druckluft, z. B. bei geöffnetem Schieber, zugeführt und zwar über eine in das Zusatzgehäuse 37 einmündende Druckluftleitung 38, das Tragrohr 6 sowie das Gehäuse 5. Durch diese Druckluftzufuhr wird verhindert, daß explosive Gasgemische an das Elektrodenprofil 4 gelangen können.

Im Bereich der Koronaentladung entstehende Gase werden aus dem Innenraum des Zusatzgehäuses 37 abgesaugt und zwar über eine Absaugleitung 39.

Gemeinsam mit der Druckluft können nun auch wieder die Gase zum Elektrodenprofil 4 zurückgeführt werden.

Die im Bereich des Materialeinlaufes und des Materialauslaufes vorgesehenen Walzen 40 dienen zur Abdichtung des Innenraumes des Zusatzgehäuses 37.

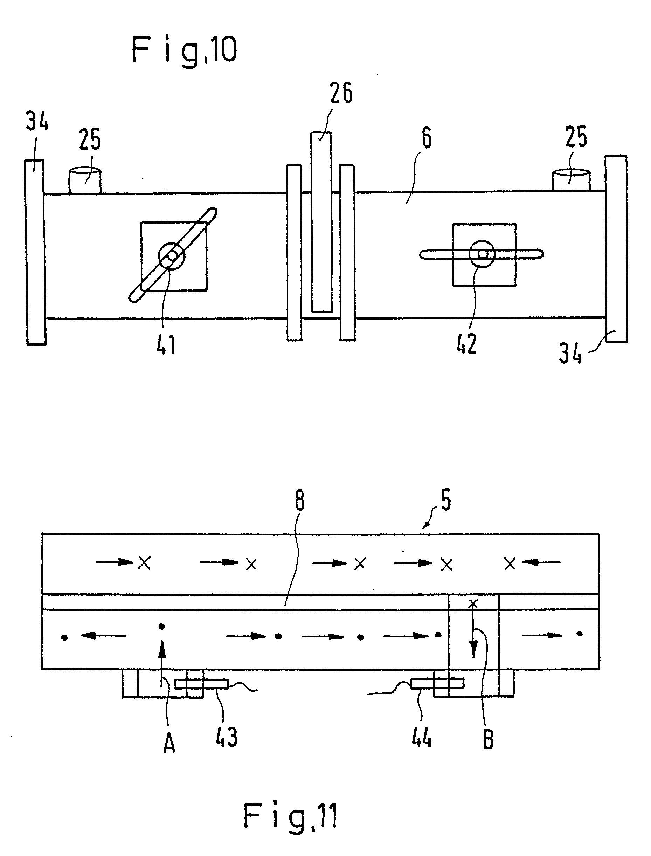

Die Figur 10 zeigt, daß innerhalb des Tragrohres 6 auch Drosselklappen 41 und 42 angeordnet sein können. Durch entsprechende Einstellung dieser Drosselklappen 41 und 42, die über den Prozeßrechner 28 gesteuert werden können, kann man dem Gasstrom im Elektrodensystem breichsbezogen regeln.

In den Anschlußflanschen 7 des Gehäuses 5 nach Figur 11 sind Meßwertaufnehmer 43 und 44 zur Kontrolle der Betriebsbedingungen über dem Prozeßrechner 28 des Elektrodensystems vorgesehen. Die Meßwertaufnehmer 43 und 44 können als Druck-, Strömungs- oder Temperaturmesser ausgebildet sein. Besonders vorteilhaft ist in diesem Zusammenhang die Anwendung eines Gasanalysators, wobei die Meßwertaufnehmer einfache Ansaugschläuche sind.

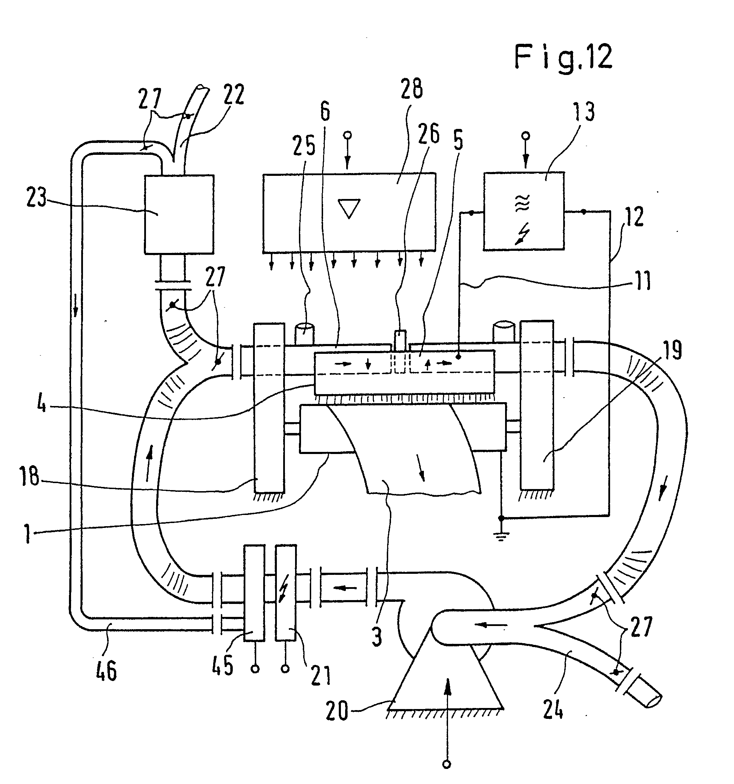

Eine weitere Ausgestaltung der erfindungsgemäßen Vorrichtung ist in der Figur 12 dargestellt. Dabei ist neben dem Austrittsrohr 22, im Anschluß an den Katalysator 23, eine Zuleitung 46 angeordnet, durch die die während der Koronabehandlung entstandene und abgesaugte Abwärme gemeinsam mit dem im Katalysator 23 veränderten Sauerstoff in den Kreislauf zurückgeführt werden kann. Über eine Drosselklappe 27 kann die Zufuhr geregelt werden. Um den Wirkungsgrad noch weiter zu erhöhen, ist eine Heizung 45 vorgesehen, mit der der durch die Abwärme zuvor bereits erwärmte Sauerstoff zusätzlich auf eine optimale Temperatur erhitzt bzw. getrocknet werden kann. Ebenso kann die mit dem Ventilator geförderte Luft erwärmt bzw. getrocknet werden.

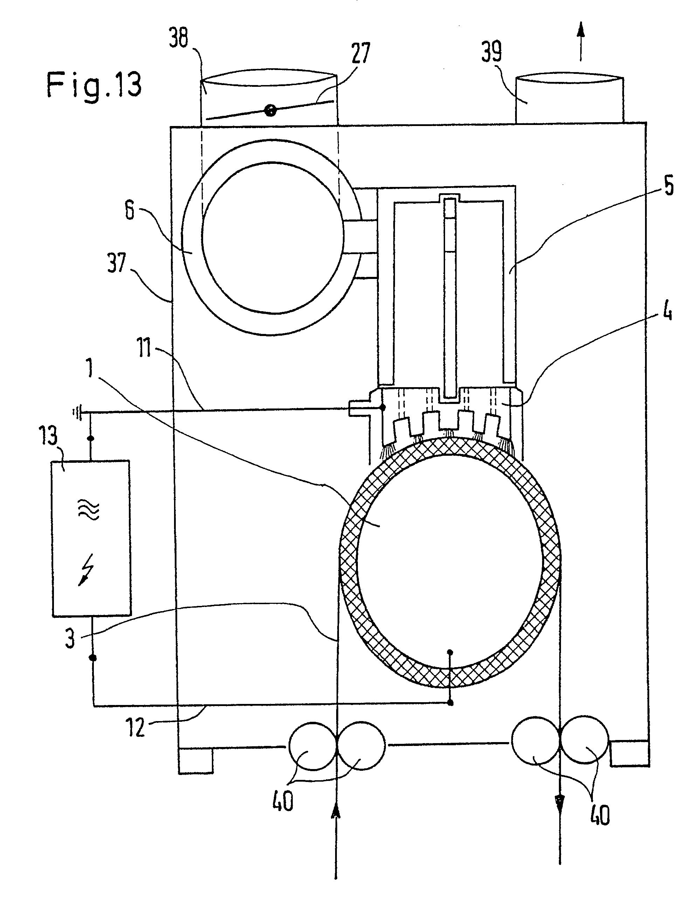

In der Figur 13 ist die Einzelheit der Vorrichtung nach der Erfindung entsprechend der Figur 9 dargestellt, jedoch ist die Druckluftleitung 38, die ohne Beaufschlagung mit Druckluft als Zulaufleitung dienen kann, mit einer Drosselklappe 27 versehen, mit der die Luftzufuhr in den Wirkungsbereich des Elektrodenprofils 4 steuerbar ist. Im Zusammenwirken mit der Absaugleitung 39 ist im Wirkungsbereich des Elektrodenprofils 4 ein Unterdruck herstellbar, durch den die Koronabehandlung günstig beeinflußbar ist. Hervorzuheben ist bei diesem Ausführungsbeispiel, daß das Elektrodenprofil 4, also die Korona-Hochleistungselektrode als Masseelektrode ausgebildet und die Trägerelektrode 1 entsprechend als spannungsführende Elektrode gestaltet ist.

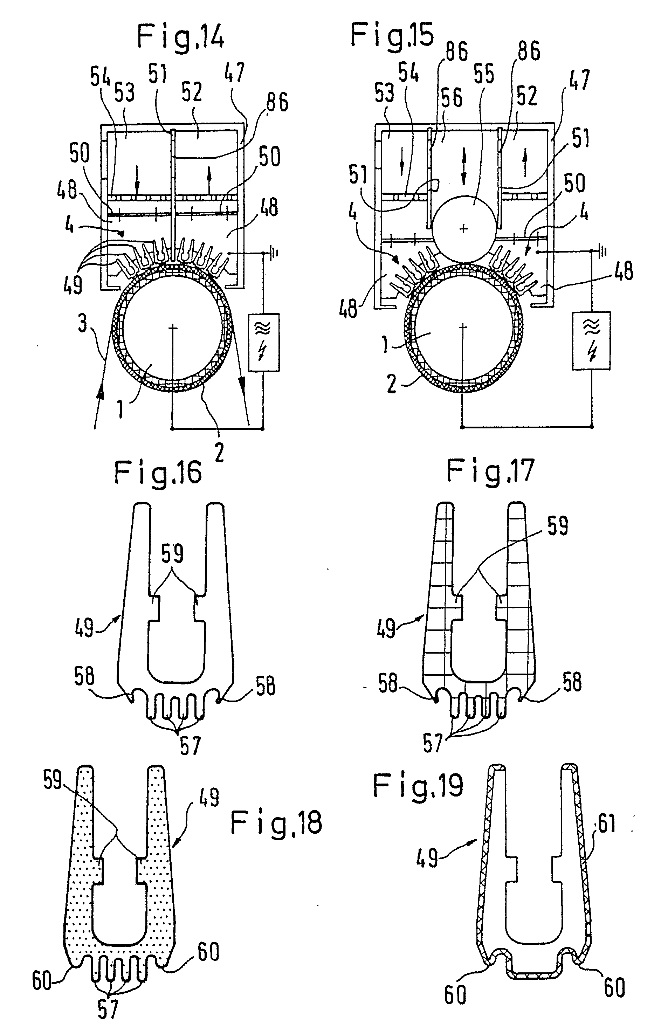

Bei der in der Figur 14 dargestellten Vorrichtung besteht die spannungsführende Trägerelektrode 1 aus einem Kohlefaserstoff und das Dielektrikum 2 aus einem Glasfaserstoff. In einem Gehäuse 47, das die Trägerelektrode 1 abschnittsweise übergreift, ist das sich in Längsachse der Trägerelektrode erstreckende Elektrodenprofil 4 angeordnet.

Das Elektrodenprofil 4 ist in Längsrichtung in zwei gleiche Teile geteilt, wobei jedes Teil wiederum aus Einzelsegmenten in Form von Elektrodenleisten 49 besteht.

Diese Elektrodenleisten 49 sind in Stützen 48 festgelegt, die wiederum mit einem Flansch 50 des Gehäuses 47 verbunden sind.

Es besteht so die Möglichkeit, das Elektrodenprofil 4 je nach Erfordernis auszutauschen, wobei eine einfache und rationelle Montage bzw. Demontage des Elektrodenprofils 4 gewährleistet ist.

Entsprechend den zu behandelnden Materialbreiten können die Elektrodenprofile 4 lagermäßig gehalten werden.

Mittels einer Trennwand 51 ist das Gehäuse in zwei Kammern 52, 53 geteilt, wobei jeweils eine Stütze 48 in einer Kammer 52,53 herausnehmbar angeordnet ist. Die Entlüftung des Elektrodenprofils erfolgt über die Kammer 52, während die Belüftung über die Kammer 53 vorgenommen wird. Über jeweils eine quer zur Strömungsrichtung in den Kammern 52, 53 angeordnete Leitplatten, die mit Durchbrechungen versehen sind, kann der Belüftungsstrom des zugeführten bzw. abgeführten Mediums gleichmäßig verteilt und dem Elektrodenprofil 4 zugeführt werden. Die Trennwände 51 sind mit Durchbrechungen 86 versehen.

Eine Weiterentwicklung der Vorrichtung gemäß der Figur 14 ist in der Figur 15 dargestellt.

Zwischen den beiden, jeweils die Elektrodenleisten 49 aufnehmenden Stützen 48 ist hierbei eine Dichtwalze 55 angeordnet, die den Belüftungsbereich vom Entlüftungsbereich trennt und abdichtet. Eine Be- und Entlüftung dieser Dichtwalze ist durch eine weitere Kammer 56 möglich. Jeweils unterschiedlich ausgebildete Elektrodenleisten 49 sind in den Figuren 16 bis 19 dargestellt.

Die Elektrodenleisten gemäß den Figuren 16 und 17 weisen an ihrer dem Material zugewandten Unterseite Entladungsstege 57 auf.

Außenseitig benachbart den äußeren Entladungsstegen 57 sind parallel zu diesem verlaufend Hilfselektroden 58 angeordnet. Mit Hilfe dieser Hilfselektroden 58 ist eine exakte Abgrenzung der Hochspannungsentladung durch elektrostatische Feldunterdrückung an den Entladungsstegen 57 möglich, so daß ein sauberer Übergang von behandeltem zu unbehandeltem Material hergestellt werden kann. Die Schenkel der im Querschnitt etwa U-förmigen Elektrodenleiste 49 verdicken sich in Richtung der Entladungsstege 57, die praktisch den Verbindungssteg zwischen den beiden Schenkeln der Elektrodenleiste 49 bilden. Diese Verdickung hat eine Erhöhung der Stabilität der Elektrodenleiste 49 zur Folge, so daß eine mechanische Beschädigung, beispielsweise durch Anschlagen von hochstehendem über die Trägerelektrode 1 geführten Material zu keiner Beeinträchtigung der Funktionsweise jeder Elektrodenleiste 49 führt.

Auf der Innenseite jedes Schenkels der Elektrodenleiste 49 sind einander zugewandt jeweils eine Stützleiste 59 angeordnet. Mit Hilfe von mit den Stützleisten 59 korrespondierenden, in der jeweiligen Stütze 48 angeordneten Arretierungsmitteln sind die Elektrodenleisten 49 in den Stützen 48 festlegbar.

Grundsätzlich besteht jede Elektrodenleiste aus einem leitfähigen Material, wobei die in der Figur 16 dargestellte Elektrodenleiste 49 aus einem leitfähigen Metall und die in der Figur 17 dargestellte aus einem leitfähigen Kohlefaserstoff besteht.

Die in der Figur 18 dargestellte Elektrodenleiste 49 ist aus einem elektrisch leitfähigen Kohlenstoff hergestellt und mit einer nichtleitenden und nichtoxydischen Keramikschicht überzogen.

Dabei kann die Keramikschicht aus einem Siliziumnitrid, Aluminiumnitrid oder aus einem Bornitrid bestehen und im sogenannten PVD-Verfahren (Physical-Vapor-Disposition) oder im CVD-Verfahren (Chemical-Vapor-Disposition) auf den Elektrodenleistenkörper aufgebracht worden sein.

Ebenso wie bei den in den Figuren 16 und 17 dargestellten Elektrodenleisten 49 sind auch hier an gleicher Position Hilfselektroden 60 vorgesehen, die allerdings nicht scharfkantig sondern ballig ausgebildet sind, so daß der keramische Überzug nicht nur einfacher auf die Oberfläche des Elektrodenleistenkörpers aufbringbar, sondern in diesem Bereich auch erheblich haltbarer ist.

Der Elektrodenleistenkörper der Elektrodenleiste 49, die in der Figur 19 dargestellt ist, besteht aus einem leitfähigen Metall. Zumindest die äußere Oberfläche des Elektrodenleistenkörpers ist mit einer keramischen Schicht 61 versehen, die beispielsweise aus einem im Plasmaverfahren oder Flammspritzverfahren aufgebrachten Aluminiumoxyid oder Aluminiumnitrid gebildet wird, wobei auch hier die Hilfselektroden 60 aus den genannten Gründen ballig ausgebildet sind.

Die der Materialbahn 3 zugewandte Seite der Elektrodenleiste 49, ist im Gegensatz zu dem in den Figuren 16 bis 18 dargestellten Elektrodenleisten 49 nicht mit Entladungsstegen 57 versehen, sondern glattflächig ausgebildet. Um ein optimales Aufbringen und Haften der keramischen Schicht auf den Elektrodenleistenkörper zu gewährleisten, sind sämtliche Übergänge gerundet.

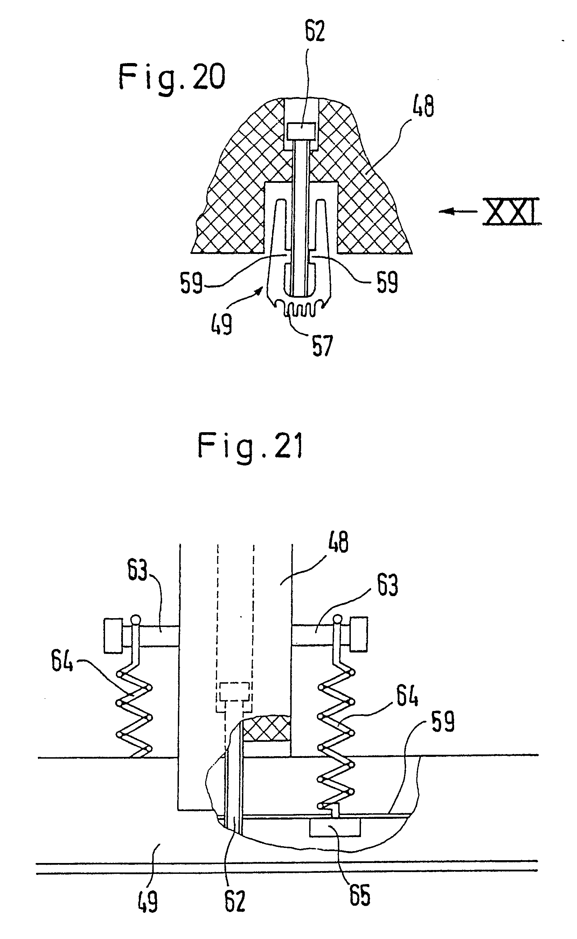

In der Figur 20 ist beispielhaft die Festlegung einer Elektrodenleiste 49 in einer Stütze 48 aufgezeigt. Mit einer Stellschraube 62, die einerseits in der Elektrodenleiste 49 festgelegt ist und sich andererseits an der Stütze 48 abstützt, kann die Elektrodenleiste 49 in ihrer Höhe und somit in ihrem Abstand zum Material 3 verändert werden, so daß auf unterschiedliche Erfordernisse hinsichtlich einer Abstandsveränderung zum Zwecke einer unterschiedlichen Koronabehandlung schnell und einfach eingegangen werden kann.

Die Figur 21 zeigt die Stütze und eine Elektrodenleiste 49 gesehen in Richtung des Pfeiles XX1 in Figur 20. Parallel zur Elektrodenleiste 49 sind in der Stütze 48 Halteschrauben 63 festgelegt, an deren Schaft jeweils eine Zugfeder 64 angehängt ist, an deren gegenüberliegendem Ende ein Halteteil 65 vorgesehen ist, daß die Stützleiste 59 der Elektrodenleiste 49 hintergreift. Durch diese Maßnahme, bei der die Elektrodenleiste 49 durch die Zugspannung der Zugfedern 64 gehalten wird, ist eine besonders einfache Verstellung der Elektrodenleiste 49 möglich.

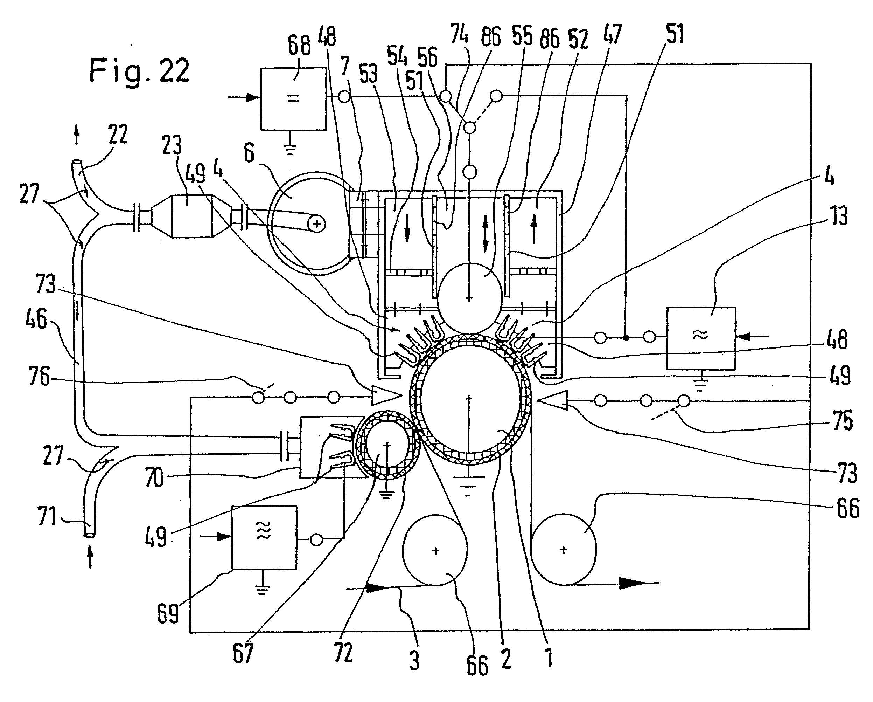

Eine erfindungsgemäße Vorrichtung, die alle Wirkungsgrad erhöhenden Maßnahmen berücksichtigt, ist in der Figur 22 dargestellt.

Über Leitwalzen 66 wird in bekannter Weise der Vorrichtung zur Koronabehandlung eine Materialbahn 3 zugeführt. Dabei liegt die Materialbahn 3 rückseitig auf einer Trägerelektrode 1 auf, die mit einem Dielektrikum 2 versehen ist. Die Materialbahn 3 wird unter zwei Elektrodenprofilen 4 hergeführt, die jeweils aus Elektrodenleisten 49 bestehen, die wiederum in Stützen 48 festgelegt sind. Mittels dieser Elektrodenleisten erfolgt die Koronabehandlung, wobei die den Elektrodenprofilen 4 zugewandte Oberfläche der Materialbahn 3 behandelt wird.

Die Elektrodenprofile 4, die Stützen 48 und die Dichtwalze 55 sind in einem entsprechend der Figur 15 ausgebildeten Gehäuse angeordnet. Das Gehäuse 47 ist über den Anschlußflansch 7 mit dem Tragrohr 6 verbunden.

Bei Betrieb der Vorrichtung und des Verfahrensprozesses wird der hochfrequente Hochspannung erzeugende Generator 13 eingeschaltet, so daß eine Koronaentladung an den Elektrodenprofilen 4 erfolgt.

Die anfallende Abwärme und die gasförmigen Luftaufspaltungsprodukte wie Ozon und Stickstoffgas od. dgl. werden durch die Kammer 52 abgesaugt und teilweise über die Kammer 53 dem Elektrodenprofil 4 in schon beschriebener Weise wieder zugeführt.

Ein Teil des über die Kammer 52 abgesaugten Gases, insbesondere aber der Anteil der Abwärme, wird über das Tragrohr 6 im Katalysator 23 zugeführt, wobei in dem Katalysator 23 eine Wandlung des dreiwertigen Ozons zu zweiwertigem Sauerstoff erfolgt. Die entstandene und erwärmte Sauerstoffatmosphäre wird über die Zuleitung 46 zu einem Gehäuse 70 geleitet, das eine Anpreßwalze 67 teilweise überdeckt.

Da erwärmte Materialbahnen 3 eine Effektivität der Koronabehandlung erhöhen, wird im vorliegenden Ausführungsbeispiel die Materialbahn 3 durch die Anpreßwalze 67, die die Funktion eines Wärmespeichers übernimmt, erwärmt. Dabei liegt die Anpreßwalze auf der Seite der Materialbahn 3 auf, die einer Koronabehandlung zu unterziehen ist, so daß im wesentlichen diese Seite mit Wärme beaufschlagt wird.

Neben der Abwärmenutzung ist auch eine separate Aufheizung von Luft und deren Zuführung durch eine weitere Zuleitung 71 in das Gehäuse 70 denkbar, beispielsweise in der Form, wie sie in der Figur 12 dargestellt und in der Figurenbeschreibung dazu geschildert ist. Zur zusätzlichen Beheizung kann beispielsweise die Abwärme von den im Prozeß arbeitenden Generatoren genutzt werden. Insbesondere dann, wenn hohe Produktionsgeschwindigkeiten zur Koronabehandlung der Materialbahnen 3 gefordert sind oder wenn schwer zu behandelnde Materialien 3 verarbeitet werden sollen, ist die Anpreßwalze 67 mit externer Wärme zu beaufschlagen.

Eine vorteilhafte Art der externen Wärmengewinnung ist ebenfalls aus der Figur 22 ersichtlich. Die Anpreßwalze 67 ist dabei mit einem Dielektrikum 72 versehen, während in dem Gehäuse 70 Elektrodenleisten 49 angeordnet sind, die an einen Generator 69 angeschlossen sind. Ohne die Bildung einer Koronaentladung wird im Zusammenwirken der Elektrodenleisten 49 und des Dielektrikums 72 durch dielektrische Verlustleistung Wärme erzeugt, mit der die einer Koronabehandlung zu unterziehende Oberfläche der Materialbahn 3 direkt und die Zuluft indirekt erwärmbar ist.

Als weitere Wärmequellen sind auch Infrarotheizungen od. dgl. denkbar. Untersuchungen haben gezeigt, daß gezielte Aufladungen des zu behandelnden Materials die Bildung von Haftzentren begünstigen, wobei diese Aufladungen sowohl vor als auch nach den Koronabehandlungspunkten vorteilhaft sind.

Über eine hochgespannte Gleichspannungsquelle 68 und nadelförmige Elektrode 73, die sowohl vor als auch nach dem Wirkungsbereich des Elektrodenprofils angeordnet sind, kann eine Gleichspannung im Ein- und Auslauf der Materialbahn 3 an das Material zur Bildung elektrostatischer Kräfte angelegt werden.

Weiter besteht die Möglichkeit, die Gleichspannungsquelle 68 über einen Schalter 74 auf die Dichtwalze 55 zur Aufladung der Materialbahn 3 zu schalten.

Mittels der Schalter 75 und 76 kann die Gleichspannung auf die Elektroden 73 geschaltet werden.

Die Stützen 48 mitsamt den Elektrodenleisten 49 sind als Einheit dem Gehäuse 47 angeordnet und können je nach Erfordernis komplett einstückig ausgewechselt werden. Das ganze System, also die Elektrodenleisten 49, die Stützen 48 und das Gehäuse 47 ist mittels des Anschlußflansches 7 an dem Tragrohr 6 abnehmbar festgelegt, so daß bei Bedarf das ganze System abgenommen und ausgewechselt werden kann.

In vorteilhafter Weise sind die Trägerelektrode 1 sowie wahlweise die Anpreßwalze 67 aus einem Kohlefaserstoff hergestellt, wobei das Dielektrikum aus einem Überzug aus Glasfaser, einem ozonfesten vulkanisierbaren Elastomer, z.B. Silikongummi, oder einem keramischen Werkstoff besteht.

## Patentansprüche

1. Vorrichtung zur Behandlung von Materialoberflächen mittels einer elektrischen Koronaentladung, umfassend eine vorzugsweise als Walzenelektrode (1) ausgebildete Koronaelektrode sowie eine an einem Gehäuse (5) festgelegte Koronahochleistungselektrode (4), zwischen denen das zu behandelnde Material hindurchgeführt wird, wobei Absaugöffnungen (15) zur Absaugung des bei der Koronaentladung entstehenden Gases vorgesehen sind, **dadurch gekennzeichnet**, daß Öffnungen (16) zur Zurückführung des Gases in den durch die Koronaelektrode (1) und die Koronahochleistungselektrode (4) gebildeten Wirkspalt in der Koronahochleistungselektrode (4) angeordnet sind.

2. Vorrichtung nach Anspruch 1, dadurch gekennzeichnet, daß ein mit dem Gehäuse verbundenes Tragrohr (6) mit einem Schieber (26) zur Trennung der Ventilationsströme versehen ist.

3. Vorrichtung nach Anspruch 1 oder 2, dadurch gekennzeichnet, daß das Gehäuse (5) und das Elektrodenprofil (4) mit Führungskerben (29,30) zum Einfügen von Trennwänden (8) versehen sind.

4. Vorrichtung nach einem oder mehreren der Ansprüche 1 bis 3, dadurch gekennzeichnet, daß die Absaugöffnungen (15) und die zusätzlichen Öffnungen (16) zwischen den Stegen (31) des Elektrodenprofiles (4) - bezogen auf die Längsachse des Elektrodenprofiles (4) - diagonal zueinander versetzt angeordnet sind.

5. Vorrichtung nach einem oder mehreren der Ansprüche 1 bis 4, dadurch gekennzeichnet, daß innerhalb der Stege (31) des Elektrodenprofiles (4) - bezogen auf die Längsachse des Elektrodenprofiles (4) - diagonal zueinander versetzte Bohrungen vorgesehen sind.

6. Vorrichtung nach einem oder mehreren der Ansprüche 1 bis 3, dadurch gekennzeichnet, daß das Elektrodenprofil (4) mit diagonal zu seiner Längsachse verlaufenden Ausbrüchen (32) versehen ist.

7. Vorrichtung nach einem oder mehreren der Ansprüche 1 bis 6, dadurch gekennzeichnet, daß die äußeren Stege (31) des Elektrodenprofiles (4) mit zur Mitte der Trägerelektrode (1) weisenden Spitzen versehen sind.

8. Vorrichtung nach einem oder mehreren der Ansprüche 1 bis 7, dadurch gekennzeichnet, daß das Elektrodenprofil (4) durch Schutzisolationen (9,10) abgedeckt ist.

9. Vorrichtung nach einem oder mehreren der Ansprüche 1 bis 8, dadurch gekennzeichnet, daß die gesamte Vorrichtung in einem abgedichteten Zusatzgehäuse (37) mit separatem Absaugstutzen (39) angeordnet ist.

10. Vorrichtung nach einem oder mehreren der Ansprüche 1 bis 9, dadurch gekennzeichnet, daß innerhalb des gesamten Ventilationskreislaufes mehrere Drosselventile (27) zur Ventilationssteuerung vorgesehen sind.

11. Vorrichtung nach Anspruch 1, dadurch gekennzeichnet, daß die Korona-Hochleistungselektrode aus mehreren, nebeneinander angeordneten und Parallel zueinander verlaufenden Elektrodenleisten (49) gebildet ist.

12. Vorrichtung nach Anspruch 11, dadurch gekennzeichnet, daß die Elektrodenleisten (49) in mindestens einer Stütze (48) angeordnet sind, die mit dem Gehäuse (47) lösbar verbunden ist.

13. Vorrichtung nach Anspruch 11, dadurch gekennzeichnet, daß die Elektrodenleisten (49) aus einem Kohlefaserstoff bestehen.

14. Vorrichtung nach Anspruch 11, dadurch gekennzeichnet, daß die Elektrodenleisten (49) aus einem leitfähigen Kohlenstoff z. B. Graphit und einer nichtleitenden und nichtoxydischen äußeren Keramikschicht beispielsweise aus Siliziumnitrid, Aluminiumnitrid oder Bornitrid bestehen.

15. Vorrichtung nach Anspruch 11, dadurch gekennzeichnet, daß die Elektrodenleisten (49) aus einem leitfähigen Metall mit einer äußeren keramischen Beschichtung, beispielsweise aus Aluminiumoxyd oder Aluminiumnitrid bestehen.

16. Vorrichtung nach Anspruch 11, dadurch gekennzeichnet, daß jede Elektrodenleiste (49) U-förmig gestaltet ist, wobei die geschlossene Stirnseite in Richtung der Trägerelektrode (1) weist.

17. Vorrichtung nach Anspruch 16, dadurch gekennzeichnet, daß die geschlossene Stirnseite in ihrem äußeren Längskantenbereich Hilfselektroden (60) aufweist.

18. Vorrichtung nach Anspruch 17, dadurch gekennzeichnet, daß die Hilfselektroden (60) scharfkantig ausgebildet sind.

19. Vorrichtung nach Anspruch 17, dadurch gekennzeichnet, daß die Hilfselektroden (60) ballig gestaltet sind.

20. Vorrichtung nach Anspruch 16, dadurch gekennzeichnet, daß die sich gegenüberliegenden Schenkel jeder Elektrodenleiste (49) sich in Richtung der geschlossenen Stirnseite verdicken.

21. Vorrichtung nach Anspruch 16, dadurch gekennzeichnet, daß die geschlossene Stirnseite auf ihrer Außenfläche mehrere, nebeneinanderliegende, in Längsrichtung der Elektrodenleiste (49) verlaufende und parallel zueinander angeordnete Entladungsstege (57) aufweist.

**22.** Vorrichtung nach einem der vorhergehenden Ansprüche 11 bis 21, dadurch gekennzeichnet, daß jede Elektrodenleiste (49) mit Stellschrauben (62) an der Stütze (48) höhenverstellbar festgelegt ist.

**23.** Vorrichtung nach einem der vorhergehenden Ansprüche 11 bis 22 dadurch gekennzeichnet, daß jede Elektrodenleiste (49) in Längsrichtung auslenkbar gelagert ist.

**24.** Vorrichtung nach einem der vorhergehenden Ansprüche 11 bis 23, dadurch gekennzeichnet, daß die Elektrodenleiste (49) auf der Innenseite der Schenkel jeweils mit einer in Längsrichtung verlaufenden Stützleiste (59) versehen ist, die von Halteteilen (65) hintergriffen werden, wobei die Halteteile (65) an Zugfedern (64) festgelegt sind, die mit der Stütze (48) verbunden sind.

**25.** Vorrichtung nach Anspruch 1, dadurch gekennzeichnet, daß zwischen der Kammer (52) und der Kammer (53) eine Dichtwalze (55) vorgesehen ist, die in Betriebsstellung an der Materialbahn (3) anliegt.

**26.** Vorrichtung nach Anspruch 25, dadurch gekennzeichnet, daß an die Dichtwalze (55) Gleichspannung angelegt ist.

**27.** Vorrichtung nach Anspruch 1, dadurch gekennzeichnet, daß in der Zuführkammer (53) und/oder der Absaugkammer (52) des Gehäuses (47) jeweils eine mit Öffnungen versehene Leitplatte (54) angeordnet ist.

**28.** Vorrichtung nach einem der vorhergehenden Ansprüche 1 bis 27, dadurch gekennzeichnet, daß der Korona-Hochleistungselektrode vorgeschaltet eine als Trägerelektrode ausgebildete Anpreßwalze (67) angeordnet ist, die auf der Trägerelektrode (1) geführten Materialbahn (3), auf ihrer dem Elektrodenprofil (4) zugewandten Oberseite aufliegt, wobei an der der Materialbahn (3) gegenüberliegenden Seite der Anpreßwalze (67) Elektrodenleisten (49) angeordnet sind.

**29.** Vorrichtung nach einem oder mehreren der vorhergehenden Ansprüche 1 bis 28, dadurch gekennzeichnet, daß vor und/oder nach dem Elektrodenprofil (4) nadelförmige, an Gleichspannung angeschlossene Elektroden vorgesehen sind.

**30.** Vorrichtung nach einem oder mehreren der vorhergehenden Ansprüche 1 bis 29, dadurch gekennzeichnet, daß dem Elektrodenprofil (4) vorgeschaltet, im Bereich der Gas-bzw. Luftzuführleitung eine Heizung (45) angeordnet ist, mit der die rückführbaren Gase bzw. die zuführbare Luft erwärmt bzw. getrocknet werden.

**31.** Vorrichtung nach einem oder mehreren der Ansprüche 1 bis 29, dadurch gekennzeichnet, daß die Trägerelektrode 1 und/oder die Anpreßwalze (67) aus einem Kohlefaserstoff bestehen und als Dielektrikum einen Überzug aufweisen, der aus Glasfaser, einem ozonfesten, vulkanisierbaren Elastomer, z. B. Silikongummi oder einem keramischen Werkstoff besteht.

**32.** Vorrichtung nach einem oder mehreren der vorhergehenden Ansprüche 1 bis 31, dadurch gekennzeichnet, daß die die Kammern (52,53,56) trennenden Trennwände (51) mit Durchbrechungen (86) versehen sind.

**Claims**

**1.** Apparatus for treating material surfaces by means of an electrical corona discharge including a corona electrode which is preferably in the form of a roller electrode (1), and a corona high power electrode (4) which is fixed to a housing (5), wherein the material to be treated is passed between the electrodes (1, 4), and wherein suction removal openings (15) are provided for sucking away the gas which is produced in the corona discharge, characterised in that openings (16) are arranged in the corona high power electrode (4) for returning the gas into the operative gap formed by the corona electrode (1) and the corona high power electrode (4).

**2.** Apparatus according to claim 1 characterised in that a support tube (6) which is connected to the housing is provided with a slider (26) for separation of the ventilation flows.

**3.** Apparatus according to claim 1 or claim 2 characterised in that the housing (5) and the electrode profile member (4) are provided with guide grooves (29, 30) for the insertion of separating walls (8).

**4.** Apparatus according to one or more of claims 1 to 3 characterised in that the suction removal openings (15) and the additional openings (16) are arranged between the limbs (31) of the electrode profile member (4), in mutually diagonally displaced relationship, with respect to the longitudinal axis of the electrode profile member (4).

5. Apparatus according to one or more of claims 1 to 4 characterised in that bores which are mutually diagonally displaced with respect to the longitudinal axis of the electrode profile member (4) are provided within the limbs (31) of the electrode profile member (4).

6. Apparatus according to one or more of claims 1 to 3 characterised in that the electrode profile member (4) is provided with apertures (32) extending diagonally relative to its longitudinal axis.

7. Apparatus according to one or more of claims 1 to 6 characterised in that the outer limbs (31) of the electrode profile member (4) are provided with tips facing towards the centre of the carrier electrode (1).

8. Apparatus according to one or more of claims 1 to 7 characterised in that the electrode profile member (4) is covered by protective insulations (9, 10).

9. Apparatus according to one or more of claims 1 to 8 characterised in that the entire apparatus is arranged in a sealed additional housing (37) with separate suction removal connection (39).

10. Apparatus according to one or more of claims 1 to 9 characterised in that provided within the entire ventilation circuit are a plurality of throttle valves (27) for ventilation control purposes.

11. Apparatus according to claim 1 characterised in that the corona high power electrode is formed from a plurality of electrode bars (49) which are arranged in side-by-side relationship and which extend parallel to each other.

12. Apparatus according to claim 11 characterised in that the electrode bars (49) are arranged in at least one support (48) which is releasably connected to the housing (47).

13. Apparatus according to claim 11 characterised in that the electrode bars (49) comprise a carbon fibre material.

14. Apparatus according to claim 11 characterised in that the electrode bars (49) comprise a conductive carbon material, for example graphite, and a non-conducting and non-oxidic outer ceramic layer for example of silicon nitride, alumunium nitride or boron nitride.

15. Apparatus according to claim 11 characterised in that the electrode bars (49) comprise a conductive metal with an outer ceramic coating, for example of aluminium oxide or aluminium nitride.

16. Apparatus according to claim 11 characterised in that each electrode bar (49) is of a U-shaped configuration, wherein the closed end faces in the direction of the carrier electrode (1).

17. Apparatus according to claim 16 characterised in that the closed end has auxiliary electrodes (60) in its outer longitudinal edge region.

18. Apparatus according to claim 17 characterised in that the auxiliary electrodes (60) are of a sharp-edge configuration.

19. Apparatus according to claim 17 characterised in that the auxiliary electrodes (60) are of a spherical configuration.

20. Apparatus according to claim 16 characterised in that the mutually oppositely disposed legs of each electrode bar (49) thicken in the direction of the closed end.

21. Apparatus according to claim 16 characterised in that the closed end is provided on its outside surface with a plurality of juxtaposed discharge limbs (57) which extend in the longitudinal direction of the electrode bar (49) and which are arranged parallel to each other.

22. Apparatus according to one of preceding claims 11 to 21 characterised in that each electrode bar (49) is fixed adjustably in height to the support (48) by adjusting screws (62).

23. Apparatus according to one of preceding claims 11 to 22 characterised in that each electrode bar (49) is mounted deflectably in the longitudinal direction.

24. Apparatus according to one of preceding claims 11 to 23 characterised in that the electrode bar (49) is provided on the inward side of the limbs with respective support bars (59) which extend in the longitudinal direction and which have holding portions (65) engaging behind same, wherein the holding portions (65) are fixed to tension springs (64) which are connected to the support (48).

25. Apparatus according to claim 1 characterised in that provided between the chamber (52) and the chamber (53) is a sealing roller (55) which in the operative position bears against the web of material (3).

26. Apparatus according to claim 25 characterised in that dc voltage is applied to the sealing roller (55).

27. Apparatus according to claim 1 characterised in that a respective guide plate (54) with openings is in feed chamber (53) and/or the suction removal chamber (52) of the housing (47).

28. Apparatus according to one of preceding claims 1 to 27 characterised in that arranged upstream of the corona high power electrode is a pressing roller (67) which is in the form of a carrier electrode and which lies on the web of material (3) guided to the carrier electrode (1), on the top side thereof which is towards the electrode profile member (4), wherein electrode bars (49) are arranged at the side of the pressure roller (67), which is in opposite relationship to the web of material (3).

29. Apparatus according to one or more of preceding claims 1 to 28 characterised in that needle electrodes connected to dc voltage are provided upstream and/or downstream of the electrode profile member (4).

30. Apparatus according to one or more of preceding claims 1 to 29 characterised in that disposed upstream of the electrode profile member (4) in the region of the gas or air feed conduit is a heating means (45) with which the gases which can be returned or the air which can be supplied are warmed or dried.

31. Apparatus according to one or more of claims 1 to 29 characterised in that the carrier electrode (1) and/or the pressure roller (67) comprise a carbon fibre material and as a dielectric have a covering comprising glass fibre, an ozone-resistant vulcanisable elastomer, for example silicone rubber, or a ceramic material.

32. Apparatus according to one or more of preceding claims 1 to 31 characterised in that the separating walls (51) which separate the chambers (52, 53, 56) are provided with apertures (86) therethrough.

**Revendications**

1. Appareil de traitement de surface des matériaux par décharge électrique en corona, comprenant une électrode en corona, constituée de préférence d'une électrode cylindrique (1), ainsi que d'une électrode en corona de haute puissance (4) fixée sur un boitier, et entre lesquelles passent les matériaux à traiter, dans lequel il est prévu des ouvertures d'aspiration (15) dans le but d'aspirer le gaz se formant lors de la décharge en corona, appareil caractérisé en ce que des ouvertures (16) sont aménagées dans l'électrode en corona de haute puissance (4) afin de réintroduire le gaz dans la zone de travail formée par l'électrode en corona (1) et l'électrode en corona de haute puissance (4).

2. Appareil selon la revendication 1 caractérisé en ce qu'un tube-porteur (6) relié au boitier est muni d'une vanne (26) pour couper le flux de ventilation.

3. Appareil selon la revendication 1 ou la revendication 2 caractérisé en ce que le boitier (5) et le profil de l'électrode (4) comportant des rainures de guidage (29,30) pour l'insertion de cloisons (8).

4. Appareil selon l'une ou plusieurs des revendications 1 à 3 caractérisé en ce que les ouvertures d'aspiration (15) et les ouvertures supplémentaires (16) situées entre les nervures (31) du profil de l'électrode (4) sont disposées transversalement les unes à côté des autres par rapport à l'axe longitudinal du profil de l'électrode (4).

5. Appareil selon l'une ou plusieurs des revendications 1 à 4 caractérisé en ce que des alésages, placés transversalement les uns à côté des autres par rapport à l'axe longitudinal du profil de l'électrode, sont disposés à l'intérieur de la nervure (31) du profil de l'électrode (4).

6. Appareil selon l'une ou plusieurs des revendications 1 à 3 caractérisé en ce que le profil de l'électrode (4) est pourvu de conduits (32) disposés tranversalement par rapport à son axe longitudinal.

7. Appareil selon l'une ou plusieurs des revendications 1 à 6 caractérisé en ce que les nervures exterieures (31) du profil des électrodes (4) sont pourvues de têtes dirigées vers le milieu de l'électrode porteuse (1).

8. Appareil selon l'une ou plusieurs des revendications 1 à 7 caractérisé en ce que le profil de l'électrode (4) est recouvert par une double isolation (9,10).

9. Appareil selon l'une ou plusieurs des revendications 1 à 8 caractérisé en ce que l'ensemble de l'appareil est disposé dans un boitier supplémentaire (37) à conduite d'aspiration séparée (39).

10. Appareil selon l'une ou plusieurs des revendications 1 à 9 caractérisé en ce que plusieurs vannes sont prévues à l'intérieur du circuit de ventilation pour en permettre la régulation.

11. Appareil selon la revendication 1 caractérisé en ce que l'électrode en corona de haute puissance est composée de plusieurs baguettes d'électrode (49) disposées les unes à côté des autres et parallèlement les unes aux autres.

12. Appareil selon la revendication 11 caractérisé en ce que les baguettes d'électrode (49) sont placées sur un support (48) (ou plusieurs) qui est lui-même rélié, de manière amovible, au boitier (47).

13. Appareil selon la revendication 11 caractérisé en ce que les baguettes d'électrode (49) sont constituées en fibre de carbone.

14. Appareil selon la revendication 11 caractérisé en ce que les baguettes d'électrode (49) sont constituées de carbone conducteur, par exemple du graphite, et d'une couche extérieure de céramique non conductrice et inerte à l'oxydation, par exemple en nitrure de silicium, en nitrure d'aluminium ou en nitrure de bore.

15. Appareil selon la revendication 11 caractérisé en ce que les baguettes d'électrode (49) sont constituées d'un métal conducteur recouvert d'une couche externe de céramique, comme par exemple d'oxyde d'aluminium ou de nitrure d'aluminium.

16. Appareil selon la revendication 11 caractérisé en ce que chaque baguette d'électrode (49) a une forme en U, dont la face fermée est dirigée vers l'électrode porteuse.

17. Appareil selon la revendication 16 caractérisé en ce que la face fermée présente des électrodes auxiliaires (60) placées sur l'arête longitudinale.

18. Appareil selon la revendication 17 caractérisé en ce que les électrodes auxiliaires (60) ont des arêtes vives.

19. Appareil selon la revendication 17 caractérisé en ce que les électrodes auxiliaires (60) ont une forme convexe.

20. Appareil selon la revendication 16 caractérisé en ce que les branches opposées de chaque baguette d'électrode (49) s'épaississent en direction de la partie frontale fermée.

21. Appareil selon la revendication 16 caractérisé en ce que la partie frontale fermée présente sur sa face externe plusieurs têtes de décharge (57) placées les unes à coté des autres, orientées dans le sens longitudinal de la baguette d'électrode (49) et disposées parallèlement les unes aux autres.

22. Appareil selon l'une des revendications précédentes 11 à 21 caractérisé en ce que chaque baguette d'électrode (49) est fixée sur le support (48) de manière à permettre d'ajuster la hauteur grâce à une vis de réglage.

23. Appareil selon l'une des revendications précédentes 11 à 22 caractérisé en ce que chaque baguette d'électrode (49) est fixée de manière réglable dans le sens de la longueur.

24. Appareil selon l'une des revendications précédentes 11 à 23 caractérisé en ce que la baguette d'électrode (49) est pourvue sur la partie interne des branches d'une barrette d'appui (59) disposée dans le sens de la longueur, branches elles-mêmes retenues par des pièces de fixation (65), ces dernières étant elles-mêmes fixées à des ressorts de traction (64) rattachés au support (48).

25. Appareil selon la revendication 1 caractérisé en ce qu'on a prévu, entre la cavité (52) et la cavité (53), un cylindre étanche (55) qui, en position de fonctionnement, entre en contact avec le trajet suivi par le matériau (3).

26. Appareil selon la revendication 25 caractérisé en ce qu'une tension constante est appliquée au cylindre étanche (55).

27. Appareil selon la revendication 1 caractérisé en ce qu'on a disposé, dans la cavité d'admission (53) et/ou dans la cavité d'aspiration (52) du boitier (47), suivant la cas, une plaque conductrice (54) percée d'ouvertures.

28. Appareil selon l'une des revendications précédentes 1 à 27 caractérisé en ce qu'on a placé en avant de l'électrode en corona de haute puissance un cylindre de pression (67) dont la partie supérieure est dirigée vers le profil de l'électrode et vers le trajet suivi par le matériau (3) acheminé vers l'électrode porteuse (1) et en ce qu'on a placé des baguettes d'électrodes (49) sur le côté du cylindre de pression (67) opposé au trajet du matériau (3).

29. Appareil selon l'une ou plusieurs des revendications précédentes 1 à 28 caractérisé en ce qu'avant et/ou après le profil de l'électrode (4), on a prévu des électrodes en forme de pointe raccordées à la tension constante.

30. Appareil selon l'une ou plusieurs des revendications précédentes 1 à 29 caractérisé en ce qu'on a disposé, à proximité de la conduite d'alimentation d'air ou de gaz, suivant le cas, et en avant du profil de l'électrode un appareil de chauffage (45) grâce auquel les gaz recyclés ou suivant le cas l'air acheminé sont réchauffés ou, le cas échéant, asséchés.

31. Appareil selon l'une ou plusieurs des revendications 1 à 29 caractérisé en ce que l'électrode porteuse (1) et/ou le cylindre de pression (67) sont composés d'un matériau en fibre de carbone et présentent en guise de diélectrique un revêtement qui est constitué par de la fibre de verre, un élastomère vulcanisable et résistant à l'ozone comme par exemple du caoutchouc de silicone ou un matériau en céramique.

32. Appareil selon l'une ou plusieurs des revendications précédentes 1 à 31 caractérisé en ce que les cloisons (51) séparant les cavités (52,53,56) sont pourvues de fentes.

Fig.1

14

# Fig.2

Fig.3

Fig.4

Fig. 5

Fig.6

# Fig.7

# Fig.8

Fig.9

38    39

6

37

5

11

1    4

13

3

12

40    40    40    40

# Fig.10

# Fig.11

Fig.12

Fig.13

Fig.14

Fig.15

Fig.16

Fig.17

Fig.18

Fig.19

Fig. 20

Fig. 21

Fig. 22

EP 0 253 145 B1